(19) Europäisches Patentamt

European Patent Office

Office européen des brevets

(11)  **EP 0 569 926 B1**

(12)  **EUROPÄISCHE PATENTSCHRIFT**

(45) Veröffentlichungstag und Bekanntmachung des
Hinweises auf die Patenterteilung:
**02.12.1998  Patentblatt 1998/49**

(51) Int. Cl.$^6$: **B24B 33/02**, B23Q 15/10

(21) Anmeldenummer: **93107628.5**

(22) Anmeldetag: **11.05.1993**

(54) **Verfahren und Honwerkzeug zum Herstellen konischer Bohrungen**

Method and honing tool for making tapered bores

Procédé et outil à aiguiser pour l'usinage d'alésages coniques

(84) Benannte Vertragsstaaten:
**AT CH DE ES FR GB IT LI NL SE**

(30) Priorität: **12.05.1992 DE 4215988**

(43) Veröffentlichungstag der Anmeldung:
**18.11.1993  Patentblatt 1993/46**

(73) Patentinhaber: **EMIL PLEIGER GmbH
45549 Sprockhövel (DE)**

(72) Erfinder:
**Pleiger, Herbert, Dipl.-Ing.
W-4322 Sprockhövel 1 (DE)**

(74) Vertreter:
**Patentanwälte Wenzel & Kalkoff
Postfach 24 48
58414 Witten (DE)**

(56) Entgegenhaltungen:
**DE-C-  899 322          US-A- 2 182 276
US-A- 4 122 634       US-A- 4 745 832**

**Beschreibung**

Die Erfindung betrifft ein verfahren zum Herstellen konischer Bohrungen an einem Werkstück mittels eines Honwerkzeugs, das einen zentralen Tragkörper aufweist und mit diesem an der Spindel einer Honmaschine angeordnet ist, mit der dem Honwerkzeug eine Drehbewegung um die Spindelachse mit steuerbarer Drehzahl und eine intermittierende Translationsbewegung längs eines Hubweges in Richtung der Spindelachse erteilbar ist, und dessen am Umfang des zentralen Tragkörpers bewegbar gelagerte und außen Honflächen tragenden Honelemente für einen fortschreitenden Abtrag längs eines radialen Weges in Richtung einer Aufweitungsachse verstellbar sind.

Das vorgenannte bekannte Verfahren dient gleichermaßen für das zylindrische wie für das konische Honen, allerdings mit dem Unterschied, daß die radiale Zustellung in Richtung der Aufweitungsachse beim Honen zylindrischer Bohrungen - von der abtragsbedingten Nachstellung abgesehen - im wesentlichen konstant gehalten wird und beim Honen konischer Bohrungen stufenweise zu- bzw. abnimmt, so daß im letzten Fall eine sogenannte Stufenbohrung entsteht, die aus einer Vielzahl zylindrischer Flächen zusammengesetzt ist. Auch bei extremer Reduzierung der Stufenhöhe wirkt sich die Unterteilung der konischen Bohrung in eine Vielzahl von zylindrischen Teilflächen bei vielen Anwendungsfällen ungünstig aus. Außerdem ergeben sich durch die übliche Länge von Honwerkzeugen, die nicht beliebig reduzierbar ist, Schwierigkeiten bei der Herstellung abgestufter konischer Bohrungen. Das bekannte Verfahren läßt sich auch nur bei verhältnismäßig geringer Konusneigung der herzustellenden Bohrung anwenden.

Insbesondere zum Herstellen von Bohrungen mit großer Konusneigung und auch zur Ausbildung durchgehend glatter Konusflächen sind bereits Verfahren angewendet worden, bei denen man sich eines Honwerkzeugs mit entsprechend konisch ausgestellten Honelementen bedient, das während der Bearbeitung ständig von Hand in Richtung einer größeren Konusöffnung nachgestellt werden muß. Diese Arbeitsweise erfordert einen beträchtlichen Zeit- und Werkzeugaufwand, so daß sie nur in Sonderfällen zum Einsatz kommen kann.

Die Druckschrift DE-A 899 322 zeigt eine Vorrichtung zum Honen einer kegeligen Innenfläche eines Hohlkörpers, wobei die Vorrichtung radial spreizbare Honkörper umfaßt. Die Spreizung der Honkörper erfolgt über eine in der Vorrichtung verlaufende Schubstange, die wiederum mittels eines durch die Schubstange axial beweglichen kegelförmigen Körpers über auswechselbare Einstellstifte die Lage der Honkörper verändert.

Es besteht daher die Aufgabe, ein Verfahren und eine Vorrichtung zu schaffen, mit denen sich Bohrungen mit durchgehend glatten Konusflächen ohne verhältnismäßig hohen Aufwand herstellen lassen.

Diese Aufgabe wird hinsichtlich eines Verfahrens durch ein Verfahren mit den Merkmalen des Anspruchs 1 gelöst.

Mit diesem Verfahren lassen sich konische Bohrungen mit glatten Konusflächen, also ohne jegliche Abstufung, mit praktisch beliebigen Konuswinkel sowie für alle vorkommenden Durchmesser und Längen herstellen.

Das erfindungsgemäße Verfahren beruht vor allem darauf, daß die den Abtrag bewirkenden Honflächen nicht mehr wie bisher auf spiralförmigen Bahnen beim Durchlaufen des Hubweges geführt werden, sondern daß die Honflächen die Bohrung auf Wendelbahnen durchlaufen. Der intermittierenden Translationsbewegung der Honflächen und deren Umlaufbewegung um die Spindelachse wird erfindungsgemäß eine weitere Bewegungskomponente überlagert, indem den Honflächen nämlich eine kontinuierliche Aufweitbewegung in radialer Richtung mit Bezug auf die Spindelachse erteilt wird. Diese Aufweitbewegung ist nicht zu verwechseln mit der abtragsbedingten radialen Zustellung nach jedem Hub.

Die Honflächen durchlaufen die Wendelbahnen mit im wesentlichen gleichförmiger mittlerer Schnittgeschwindigkeit $v_{cm}$, so daß sich unabhängig von der jeweiligen Position der Honfläche an der Bearbeitungsfläche optimale Zerspanungsverhältnisse ergeben. Die Einhaltung eines im wesentlichen konstant vorgegebenen Wertes der mittleren Schnittgeschwindigkeit $v_{cm}$ wird erfindungsgemäß durch eine entsprechende rechnergestützte Abstimmung und Steuerung der Hubgeschwindigkeit $v_p$, der Aufweitgeschwindigkeit $v_n$ in radialer Richtung und der Umfangsgeschwindigkeit $v_r$ ermöglicht. Das Maschinenprogramm steuert gleichzeitig nach entsprechender Eingabe der Vorgabedaten die exakte Einhaltung der Wendelbahnen durch die Honflächen längs ihres Weges während jedes Arbeitshubes.

Vorzugsweise wird nach einer erfindungsgemäßen Weiterbildung des Verfahrens eine geeignete konstante Hubgeschwindigkeit $v_p$ vorgegeben und eingehalten, während der für den jeweiligen Anwendungsfall ausgewählte mittlere Wert der Schnittgeschwindigkeit $v_{cm}$ durch eine entsprechende Regelung der Umfangsgeschwindigkeit $V_r$ sowie der Konusgeschwindigkeit $v_l$ im wesentlichen konstant gehalten wird.

Hierfür gelten folgende Beziehungen, wonach

$$v_{cm} = \sqrt{v_l^2 + v_r^2}$$

$$v_r = \frac{D_{cm} \times \pi \times n}{1000}$$

$$v_l = \sqrt{v_p^2 + v_n^2}$$

ist.

Durch diesen Zusammenhang läßt sich die Schnittgeschwindigkeit $v_{cm}$ folglich über eine entsprechende Regelung der Spindeldrehzahl n in Anpassung an den mittleren Hondurchmesser $D_{cm}$ und der Aufweitgeschwindigkeit $v_n$ in radialer Richtung konstant halten. Diese Abhängigkeiten berücksichtigt das bei dem erfindungsgemäßen Verfahren zum Einsatz kommende Maschinenprogramm.

Um den Programm- und Steuer- bzw. Regelaufwand für die Konstanthaltung eines vorgegebenen günstigen Wertes der mittleren Schnittgeschwindigkeit $v_{cm}$ möglichst gering zu halten, wird nach einer erfindungsgemäßen Weiterbildung des Verfahrens durch entsprechende Programmgestaltung nur die Umfangsgeschwindigkeit $v_r$, also die Spindeldrehzahl bezogen auf den jeweiligen Momentanwert des mittleren Hondurchmessers $D_{cm}$, kontinuierlich geregelt, während man für die Hubgeschwindigkeit $v_p$ und die Aufweitgeschwindigkeit $v_n$ geeignete Werte vorgibt und im wesentlichen konstant hält.

Schließlich soll erfindungsgemäß auch berücksichtigt werden, daß die Umfangsgeschwindigkeit $v_r$ bei im wesentlichen konstant gehaltener mittlerer Schnittgeschwindigkeit $v_{cm}$ derart unter Berücksichtigung der ebenfalls im wesentlichen auf einem konstanten Wert gehaltenen Hubgeschwindigkeit $v_p$ geregelt wird, daß ein Wert für den Kreuzungswinkel der Wendelbahnen in der Größenordnung von 50 bis 90° erreicht wird. Denn auch bei dem erfindungsgemäßen Verfahren soll der jeweils erforderliche und für das Honverfahren an sich charakteristische Kreuzschliff der gehonten Oberfläche erreicht werden.

Das erfindungsgemäße Verfahren läßt sich mit vorhandenen Honwerkzeugen ausführen. Allerdings sind die Honbereiche bekannter Honwerkzeuge, die bisher nur oder weitaus überwiegend zum zylindrischen Honen eingesetzt werden, begrenzt.

Hinsichtlich einer Vorrichtung wird die obengenannte Aufgabe gelöst durch eine Vorrichtung mit den Merkmalen des Anspruchs 5.

Bei dem erfindungsgemäßen Honwerkzeug sind an dem Tragkörper in symmetrischer Verteilung Segmente in Radialebenen schwenkbar gelagert, die radial nach außen weisende Honelemente tragen und deren Schwenkbewegung mittels einer Aufweitvorrichtung steuerbar ist. Die schwenkbare Lagerung der Segmente am Tragkörper ermöglicht vor allem, wie noch gezeigt wird, die Erfassung eines breiten Aufweitbereichs bzw. Durchmesserbereichs, wie es für konisches Honen erforderlich ist, und die schwenkbar oder ausschwenkbar gelagerten Segmente tragen radial nach außen weisende Honelemente für den Eingriff mit der Bearbeitungsfläche des Werkstücks. Mittels einer Aufweitvorrichtung wird die Schwenkbewegung der Segmente gesteuert und genau dosiert, so daß die Honflächen, also die Arbeitsflächen an den Honelementen, den vorgeschriebenen Wendelbahnen während des Arbeitshubes genau folgen können. Deshalb kommt der Ausbildung der Aufweitvorrichtung und dem Zusammenwirken zwischen der Aufweitvorrichtung und den Segmenten im Rahmen der Erfindung besondere Bedeutung zu.

Es ist möglich, die Segmente über eine hydraulische Aufweitvorrichtung zu steuern. Erfindungsgemäß, wird jedoch eine mechanische Lösung bevorzugt, wonach die Aufweitvorrichtung als im Tragkörper verschiebbarer Aufweitdorn mit einem Nockengetriebe oder einem Kurbelgetriebe od. dgl. zum Ausschwenken der Segmente ausgebildet ist. Da die Segmente symmetrisch am Umfang des Tragkörpers angeordnet sind, kann eine als Aufweitdorn ausgebildete Aufweitvorrichtung in zentraler Lage im Tragkörper eine besonders gleichmäßige Schubbewegung auf die Segmente zum Ausschwenken derselben ausüben.

Erfindungsgemäß wird bevorzugt, daß das Nockengetriebe zur Übertragung der Schubkraft von dem Aufweitdorn auf die Segmente aus segmentseitigen Rollen und dornseitigen Führungsflächen oder umgekehrt aus dornseitigen Rollen und segmentseitigen Führungsflächen besteht.

Erfindungsgemäß ist ferner zweckmäßig, daß jedes Segment eine langgestreckte Form aufweist und mit einem Ende drehbar bzw. schwenkbar an dem Tragkörper gelagert ist und daß sich der Kontaktbereich der Aufweitvorrichtung näher an dem drehgelagerten Ende als an dem anderen Ende des Segmentes befindet. Die Form der Segmente in Verbindung mit der Drehlagerung an einem Ende des Segments und mit dem Kontaktbereich zwischen Rolle und Führungsfläche in der Nähe des Drehlagers des Segments ermöglicht zum einen ein weitgehend flaches Anlegen der Segmente an den Tragkörper zur Erreichung möglichst kleiner Außen- bzw. Hondurchmesser und zum anderen ein relativ weites Ausschwenken der Segmente.

Diese Form und Anordnung der Segmente ist auch maßgeblich dafür, daß sich das Honelement jeweils im Bereich des anderen von dem Drehlager des Segments entfernten Ende des Segments befindet und auf diese Weise am weitesten nach außen schwenkbar ist.

Das andere Ende des Segments soll erfindungsgemäß entweder frei oder durch eine entsprechende gelenkige Verbindung mit dem Tragkörper ebenfalls geführt sein.

Vor allem für die erfindunsgemäße Lösung, bei der das andere Ende des Segments frei und nicht gehalten oder geführt ist, ist eine erfindungsgemäße Weiterbildung vorteilhaft, wonach die Segmente in radialen Aufnahmeschlitzen des Tragkörpers schwenkbar bzw. drehbar gelagert sind, die vorzugsweise Führungsschlitze für eine beidseitige Abstützung bzw. Führung der Segmente bilden.

Die Aufnahme der Segmente in radialen Aufnahmeschlitzen des Tragkörpers reduziert den kleinsten Außendurchmesser des Honwerkzeugs weiter, und gleichzeitig wird jedes Segment - je nach Drehrichtung - an einer der beiden Schlitzwandungen abgestützt und geführt, wenn das Segment beidseitig an den Schlitzwandungen mit Spiel anliegt.

Zur Ausbildung der Aufweitvorrichtung in Gestalt des Aufweitdorns und für dessen Steuerung ist erfindungsgemäß vorgesehen, daß der Aufweitdorn in einer zentralen axialen Bohrung des Tragkörpers axial verschiebbar gelagert und eine im Querschnitt gewölbte, am Umfang des Aufweitdorns ringsum verlaufende Führungsfläche aufweist, die mit entsprechenden Rollen an der Innenseite jedes Segmentes in Eingriff steht und die das Verschwenken der Segmente bewirkt, wenn der Aufweitdorn mittels einer Schubstange axial nach vorn bewegt wird, die mit einem Stellgetriebe bzw. einer Schubantriebseinrichtung zu verbinden ist. Diese Lösung läßt sich konstruktiv in relativ einfacher Weise verwirklichen und garantiert eine zuverlässige genaue Arbeitsweise der Aufweitvorrichtung zum Ausschwenken der Segmente.

Erfindungsgemäß ist weiterhin vorgesehen, daß die Segmente in der Ruhelage an bzw. in dem Tragkörper anliegen, und zwar vorzugsweise bündig in den Aufnahmeschlitzen angeordnet sind, die die Segmente als Führungsschlitze je nach Drehrichtung mit der entsprechenden Schlitzwandung abstützen. Auf diese Weise liegen die Segmente einschließlich der Honelemente in der Ruhelage geschützt innerhalb der trogförmigen Aufnahmeschlitze, und es wird ein minimaler Außendurchmesser des Honwerkzeugs in der Ruhe- bzw. Ausgangslage erreicht.

Damit die Segmente auch in der Ruhelage eine definierte Position im Tragkörper einnehmen, liegen sie dort erfindungsgemäß an einem zentralen Anschlagzapfen an, der als Fortsatz des Aufweitdorns ausgebildet ist.

In besonders einfacher und sicherer Weise ist die Rückholung der Segmente aus der aufgeweiteten bzw. ausgeschwenkten Lage der Segmente möglich, wenn erfindungsgemäß eine Ringfeder bzw. ein umschlingender Zugfederstrang in entsprechenden Ausnehmungen an der Außenseite der Segmente eingelegt ist, die beim Ausschwenken der Segmente entsprechend gespannt wird, deren Vorspannung jedoch ausreicht, die Segmente in der Ruhelage an den Tragkörper bzw. an dessen zentralen Anschlagzapfen zu drücken.

Auch die Rückführung des Aufweitdorns in die Ruhelage oder in eine Zwischenposition mit kleinerem Hondurchmesser würde durch die Rückstellung der Segmente mittels der Ringfeder bzw. mittels des umschlingenden Zugfederstranges bewirkt. Aber erfindungsgemäß ist für eine sichere und schnelle Rückführung auch des Aufweitdorns in die Ruhelage oder in eine Zwischenposition eine Rückstellfeder zwischen einem Absatz in einer rückseitigen Bohrung des Tragkörpers und einem Absatz des Aufweitdorns vorgesehen, wobei der Absatz durch eine Scheibe am inneren Ende des Aufweitdorns gebildet sein kann.

Von besonders erfindungswesentlicher Bedeutung ist die bevorzugte Verbindung zwischen den Honelementen und den entsprechenden Segmenten. Denn zur Anpassung an die jeweils vorgegebene Konusneigung ist jedes Honelement schwenkbar an dem betreffenden Segment gelagert, und zwar vorzugsweise in Form einer Honleiste. Diese schwenkbare bzw. pendelbare Aufhängung jedes Honelements an dem zugeordneten Segment bewirkt stets eine optimale Anlage der Honfläche des Honelements bzw. der Honleiste an der Bearbeitungsfläche, und die Selbsteinstellung des Honelements auf den jeweils gewünschten Konuswinkel erleichtert die Handhabung und erweitert die Anwendungsmöglichkeiten des Honwerkzeugs beträchtlich.

Vorzugsweise ist das Schwenklager der Honleiste an einer dem Drehlager bzw. der Anlenkstelle des einen Ende des Segmentes am Tragkörper abgewandten Stelle, vorzugsweise am freien Ende des Segmentes, angeordnet. Denn diese Stelle wird beim Ausschwenken des Segments radial am weitesten vom Zentrum entfernt, so daß ein hier angelenktes Honelement einen max. Hondurchmesser erreicht.

Jedes Segment soll zweckmäßig aus zwei fest miteinander verbundenen Segmentplatten bestehen, zwischen denen ein mit einem Honstein od. dgl. besetzter Steg des Honelementes mittels eines Zapfens schwenkbar gehalten und geführt ist. Diese Bauweise führt zu Segmenten mit hohem Widerstandsmoment der am stärksten belasteten Biegeebene. Gleichzeitig ergibt sich durch die beidseitige Einfassung und Lagerung der Honelemente eine vibrationsfreie Halterung und Stützung der Honelemente an den Segmenten.

Eine optimale Anpassung jedes Honelementes an den jeweils erforderlichen Schwenkwinkel ergibt sich, wenn das Schwenklager jedes Honelementes mittig an diesem angeordnet ist.

In der Praxis hat sich gezeigt, daß drei oder mehr Segmente, möglichst eine ungerade Zahl, in symmetrischer Verteilung und Anordnung an dem Tragkörper eine optimale Lösung darstellen unter dem Gesichtspunkt der Ausbildung eines Tragkörpers mit kleinstmöglichem Außendurchmesser, wenn sich die Segmente in der Ruhelage befinden und innerhalb der Aufnahmeschlitze liegen.

Für Antrieb und Steuerung der Aufweitvorrichtung gibt es verschiedene Möglichkeiten. Entscheidend ist bei einer mechanischen Lösung, die sich einer Schubstange bedient, daß diese nicht zu einer sperrigen Konstruktion führt, deren Aufbau im Arbeitsbereich eine Behinderung darstellt.

Deshalb schlägt die Erfindung eine Antriebseinrichtung für die Aufweitvorrichtung eines Honwerkzeugs vor, dessen zentraler Tragkörper wie gewöhnlich am freien Ende einer Antriebsstange einer Honmaschine auswechselbar befestigt wird, wobei die Antriebsstange mit einer Honspindel fest verbunden ist, die in einem an einer Führungssäule der Honmaschine verfahrbaren Hubschlitten drehbar gelagert und mit einem Drehantrieb versehen ist.

Die erfindungsgemäße Lösung für die Antriebseinrichtung bei der vorstehend angegebenen Maschinenart sieht vor, daß die Antriebsstange und die Honspindel als Hohlwellen ausgebildet sind, daß sich eine Schubstange als Antrieb der Aufweitvorrichtung durch die Honspindel und die Antriebsstange erstreckt und daß ihr oberes Ende in einer auf dem Hubschlitten angeordneten Schubantriebseinrichtung aufgenommen ist, mit der der Antriebsstange eine genau dosierbare Schubbewegung zur Übertragung auf die mit dem unteren Ende der Schubstange verbundene Aufweitvorrichtung des Honwerkzeugs erteilbar ist. Durch diese Lösung sind die an der Übertragung der Schubkraft auf die Aufweitvorrichtung am Honwerkzeug beteiligten Bauteile und Komponenten im Arbeitsbereich des Honwerkzeugs und auch im Bereich der Honspindel und der mit dieser verbundenen Antriebsstange praktisch unsichtbar und können keinerlei Hindernis bilden. Dies wird vor allem durch die innere Anordnung der Schubstange in der Honspindel und in der Antriebsstange erreicht. Falls sie nicht verkleinert ist, könnte lediglich die auf dem Hubschlitten angeordnete Schubantriebseinrichtung sichtbar sein, also in einem Bereich, wo normalerweise keinerlei Handhabung stattfindet. Dennoch wird über die Schubstange eine sehr genau dosierbare Schubbewegung für eine genaue Arbeitsweise der Aufweitvorrichtung erreicht.

Für die gewünschte genaue Arbeitsweise der Aufweitvorrichtung ist eine erfindungsgemäße Weiterbildung von Bedeutung, wonach nämlich die Schubantriebseinrichtung eine Kugelrollspindellagerung des oberen Endes der Schubstange, einen elektrischen Motor und ein Untersetzungsgetriebe umfaßt. Die Kugelrollspindelkonstruktion gestattet eine äußerst feinfühlige, genaue Steuerung und Verschiebung der Schubstange.

Ausführungsbeispiele der Erfindung werden nachstehend mit Bezug auf die Zeichnungen näher erläutert. In den Zeichnungen zeigen:

Fig. 1      eine Längsschnittdarstellung eines Honwerkzeugs mit in der Ruhelage befindlichen Segmenten;

Fig. 2      eine Längsschnittdarstellung eines Honwerkzeugs wie in Figur 1, jedoch mit aus der Ruhelage radial nach außen verschwenkten Segmenten;

Fig. 3      eine Seitenansicht zu Figur 1 und 2;

Fig. 4      eine Querschnittsdarstellung zu den vorhergehenden Figuren;

Fig. 5      eine Draufsicht des Honwerkzeugs nach Figur 1 - 4;

Fig. 6      eine Seitenansicht einer in besonderer Weise ausgerüsteten Vertikal-Honmaschine;

Fig. 7      eine schematische Ansicht einer Kugelrollspindellagerung für eine Schubstange als Bestandteil der Ausrüstung der Vertikal-Honmaschine von Figur 6.

Fig. 8      eine ähnliche Längsschnittdarstellung eines Honwerkzeugs wie in Figur 2 zur Verdeutlichung der Lage und Richtung der bei Ausübung des erfindungsgemäßen Verfahrens betroffenen Achsen, Geschwindigkeiten und Kräften in Verbindung mit der Kurzzeichen-Übersicht am Ende der Beschreibung;

Fig. 9      eine Längsschnittdarstellung einer Tandem-Ausführung eines Honwerkzeugs;

Fig. 10      eine Längsschnittdarstellung des Werkzeugs von Fig. 9, jedoch mit geänderter Einstellung des Konuswinkels.

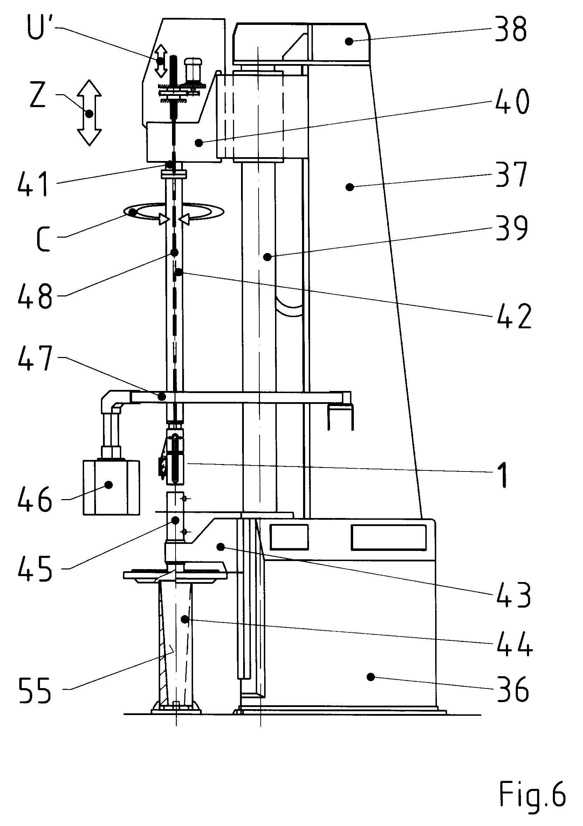

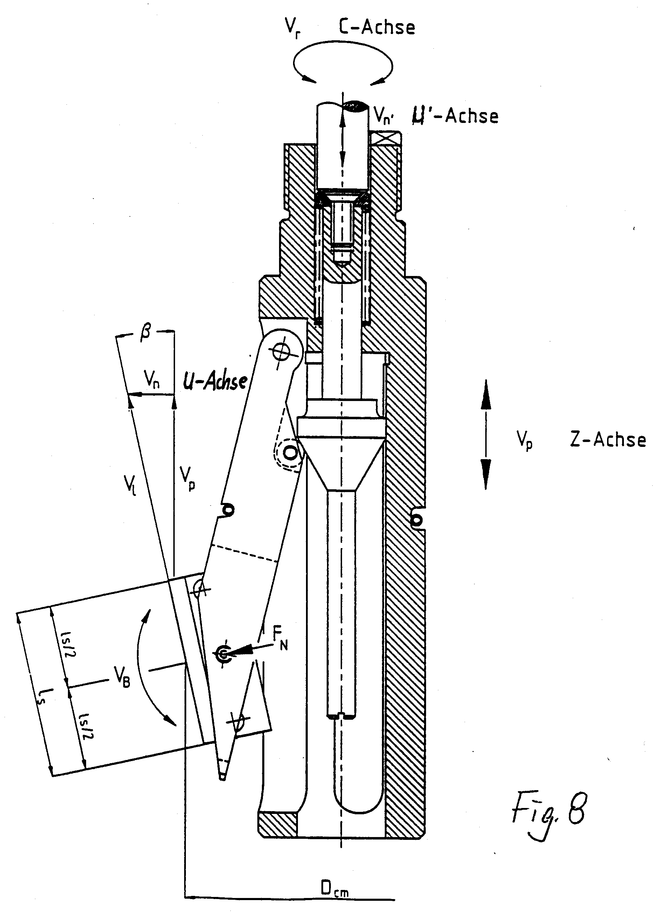

Im folgenden werden die bei der Durchführung eines typischen Ausführungsbeispiels des erfindungsgemäßen Verfahrens notwendigen bzw. zweckmäßigen Maßnahmen und Schritte unter Bezugnahme auf die am Ende der Beschreibung beigefügte Kurzzeichen-Übersicht und die Darstellung eines Honwerkzeugs in Figur 8 erläutert, wobei es überwiegend um die Herstellung einer konischen Bohrung an einem Werkstück mittels einer Vertikal-Honmaschine etwa nach Art der in Figur 6 dargestellten Maschine mit einem für konisches Honen geeigneten Honwerkzeug geht:

Ausgangsbedingungen

- Die Antriebe der Honmaschine, nämlich der Motor für die intermittierende Translationsbewegung eines Hubschlittens mit einer Honspindel und einer Schubstange mit daran montiertem Honwerkzeug, sowie der die Aufweitung bzw. Spreizung der Honelemente des Honwerkzeugs längs eines radialen Weges in Richtung einer Aufweitungsachse bewirkende Motor und Antrieb sowie schließlich der Drehantrieb der Honspindel und der Antriebsstange sind in Bereitschaft eingeschaltet.
- Die Honmaschine ist betriebsbereit im Einricht-Status
- Die Rüstarbeiten, die die Hubantriebsstange, die Montage des Honwerkzeugs, die Bestückung des Honwerkzeugs mit geeignetem Schneidstoff im Hinblick auf die Anforderungen des Werkstücks und schließlich die Spannmaßnahmen zum Ein- und Aufspannen des Werkstücks betreffen, sind abgeschlossen.

Maschineneingabe

-   Es steht ein typisches Werkstattprogramm zum Konushonen auf der Grundlage der in der Kurzzeichen-Übersicht dargestellten Zusammenhänge und Abhängigkeiten sowie unter Verwendung der dort angegebenen Größen zur Verfügung.
-   Im Tastenfeld der CNC-Steuerung mit Display werden die werkstückbezogenen Daten eingegeben, nämlich der große Konusdurchmesser $D_1$, der kleine Konusdurchmesser $D_2$ und die Honlänge $l_H$, woraus das Rechnerprogramm den Konuswinkel $\beta$ errechnet.

Andere Eingaben sind möglich, da der $D_1$; $D_2$; $l_H$ und $\beta$ in gegenseitiger Abhängigkeit stehen.

-   Es folgt die Positioniereingabe von Hub und Aufweitung, wobei das Werkzeug an die jeweiligen Positionen zur Vornahme der entsprechenden Eingabe am Werkstück verfahren wird.
    Auf diese Weise werden die auf das Werkstück in seiner Spannlage bezogenen Daten zum Honahleausfahren $P_W$ insbesondere für den Werkzeugwechsel sowie die Position $P_1$ für den Umschaltpunkt 1 und $P_1$ für den Umschaltpunkt 2 eingegeben.
-   Die augenblickliche Hubposition $P_P$ wird auf den oberen größeren Konusdurchmesser $P_1$ positioniert.
-   Für die Aufweitung wird die augenblickliche Aufweitungsposition $N_P$ auf Konusbohrungskontakt gefahren und auf $N_1$ (Aufweitung setzen in Abhängigkeit von $P_1$) gesetzt.
-   Die Achsen Hub und Aufweitung sind nun gekoppelt.

Schnittwerteingabe

-   Nach Wahl der geeigneten mittleren Schnittgeschwindigkeit $v_{cm}$ (in Abhängigkeit vom Schneidstoff der Honflächen, vom Werkstoff des Werkstücks etc.) und Eingabe des Wertes errechnet das Programm die notwendige Aufweitgeschwindigkeit der Druckstange $v'_n$ und gegebenenfalls die Konusanstellgeschwindigkeit $v_B$.
-   Eingabe des geeigneten Wertes für die Hubgeschwindigkeit $v_p$.
-   Das Rechenprogramm errechnet automatisch die folgenden Werte:

    $v_l$ aus $v_p$ und $v_n$
    $v_r$ aus $v_{cm}$ und $v_l$
    $n$ aus $v_r$ und $D_{cm}$
    $\alpha$ aus $v_l$ und $v_r$

Andere alternative Eingaben sind möglich, da die Geschwindigkeiten in Abhängigkeit vom Honwinkel und vom Konuswinkel sowie von der Drehzahl stehen.

Bearbeitungswerteingabe (Aufweitung, Bearbeitungszeit)

-   Andruckkraft $F_N$ eingeben
-   kontinuierliche Aufweitung $S_K$ bzw. Schrittaufweitung $S_s$ in Verbindung mit der Schrittgröße $S_{s_{\Delta s}}$ der Schrittaufweitung für das Aufweitverfahren eingeben.
-   Die Bearbeitungszeiten $t_{cr}$ (cutting-rough) bzw. $t_{cf}$ (cutting-finish) werden eingegeben.

Ablauf der konischen Honbearbeitung

-   Honwerkzeug in das Werkstück in eine beliebige Ausgangsposition einfahren.
-   Zyklus-EIN-Taste drücken.
-   Die Bearbeitung läuft automatisch.

Stop der konischen Honbearbeitung

-   Ein Stop der konischen Honbearbeitung nach Programm ergibt sich, wenn
-   die Bearbeitung durch eine integrierte Meßeinrichtung abgebrochen wird, oder
-   die Bearbeitungszeit abgelaufen ist oder
-   die Bearbeitung bei zu großem Steinverschleiß abgebrochen wird oder
-   der Abbruch der Bearbeitung manuell erfolgt.

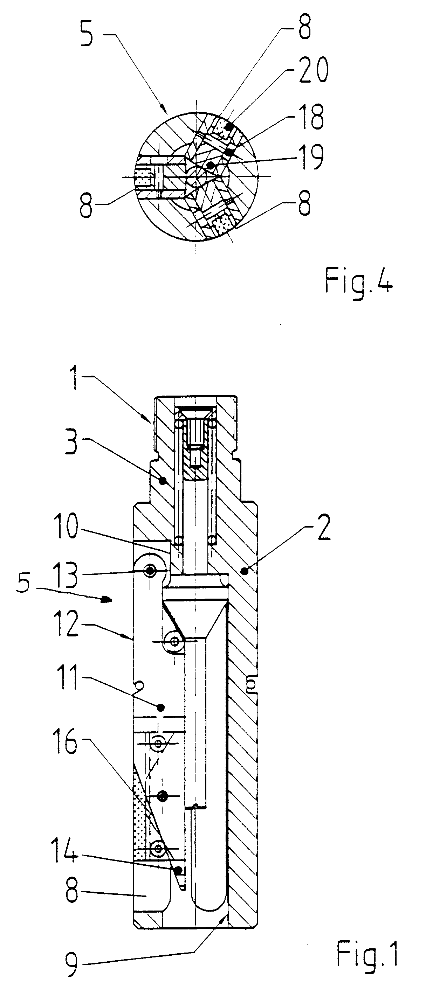

Bei dem in Figur 1 - 5 dargestellten und allgemein mit 1 bezeichneten Honwerkzeug handelt es sich um ein Ausführungsbeispiel der Erfindung, das sich besonders für den Einsatz in dem erfindungsgemäßen Verfahren zum Herstellen konischer Bohrungen eignet. Es ist jedoch ebenso bei der Honbearbeitung von zylindrischen Bohrungen anzuwenden.

Das Honwerkzeug 1 weist einen rohr- bzw. rollenförmigen Tragkörper 2 auf, der an seinem hinteren Ende mit einem Verbindungsschaft 3 mit Außengewinde für den Anschluß an eine in den Figuren 1 - 5 nicht dargestellte, aber Figur 6 entnehmbare Antriebsstange 42 versehen ist. Für den formschlüssigen Eingriff zwischen dem Verbindungsschaft 3 und der Antriebsstange 42 ist eine Mitnehmerkupplung mit einem Paar Mitnehmer 4 an der Stirnseite des Verbindungsschaftes 3 vorgesehen.

An dem Tragkörper 2 sind drei in radialer Richtung ausschwenkbare und allgemein mit 5 bezeichnete Segmente angeordnet und mit einem Ende 11 jeweils drehbar an dem Tragkörper 2 gelagert. Wie Figur 4 zeigt, sind die Segmente 5 symmetrisch am Umfang des Tragkörpers 2 angeordnet.

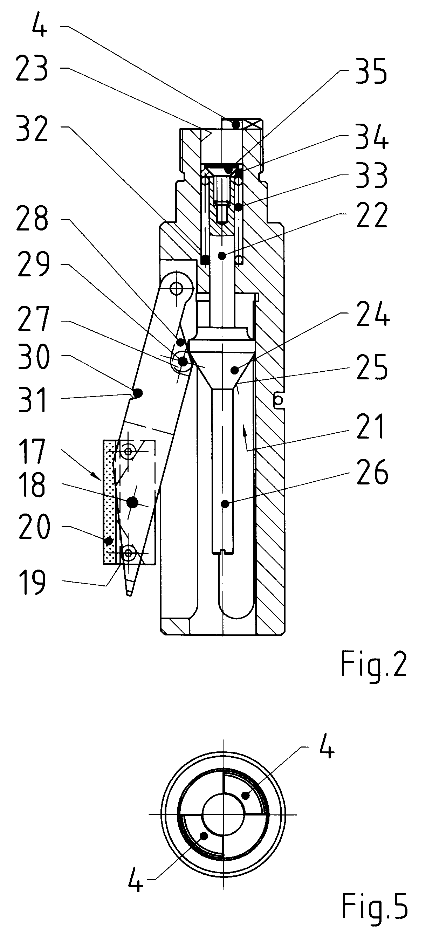

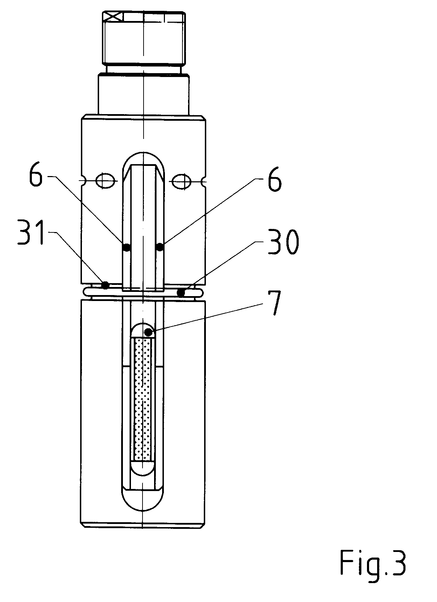

Jedes Segment 5 weist eine langgestreckte Form auf, wie die Zeichnung erkennen läßt, und besteht aus zwei Segmentplatten 6 mit einem Zwischenkörper 15, in dem sich eine schlitzförmige Ausnehmung 7 (vgl. Fig. 2 und 3) befindet. Es ist jedoch auch möglich, das Segment 5 einstückig aus Stahlblech zu fertigen und die Ausnehmung 7 einzuarbeiten. Jedem Segment 5 ist ein radialer Aufnahmeschlitz 8 am Umfang des Tragkörpers 2 zugeordnet, in den die drei Segmente 5 in der Ruhelage (vgl. Fig. 1 und 4) vollständig sowie bündig mit der Tragkörperwandung abschließend eingezogen sind. Die drei symmetrisch am Umfang des Tragkörpers 2 verteilten Aufnahmeschlitze 8 verlaufen vom Umfang des Tragkörpers 2 aus radial nach innen und gehen dort in eine vorn offene axiale Bohrung 9 über, in die die Segmente 5 in der Ruhelage hineinreichen.

Jedes Segment 5 ist mit einem Ende 11 in der dargestellten Form mittels eines Drehlagers 12 neben einem Absatz 10 im Tragkörper 2 drehgelenkig bzw. drehbar mit diesem verbunden, wobei die Drehachse durch einen Zapfen 13 und entsprechende Zapfenbohrungen definiert ist.

Das andere Ende 14 jedes Segments 5 weist eine Abschrägung 16 in der dargestellten Form auf und trägt in der schlitzförmigen Ausnehmung 7 in schwenkbarer Verbindung eine Honleiste bzw. ein Honelement 17, wobei die Schwenkachse des Honelements 17 durch einen etwa mittig angeordneten Zapfen 18 gebildet wird, der beidseitig, wie insbesondere auch Figur 4 zeigt, in den Segmentplatten 6 jedes Segments 5 verankert ist.

Jedes Honelement 17 weist einen Steg 19 auf, der mit einem Honstein 20 od. dgl. besetzt ist.

In der zentralen axialen Bohrung 9 ist ein allgemein mit 21 bezeichneter Aufweitdorn verschiebbar gelagert, der aus einem in der axialen Bohrung 23 angeordneten Schaft 22 sowie einem Konus 24 mit einer Führungsfläche 25 am Umfang und einem daran anschließenden Anschlagzapfen 26 besteht, wie die Zeichnung zeigt. Zwischen den Segmentplatten 6 jedes Segments 5 ist in der Nähe des einen Endes 11, wie der Zeichnung zu entnehmen ist, jeweils eine Rolle 27 in einer Ausnehmung 28 auf einem Zapfen 29 drehbar gelagert. Die drei Rollen 27 stehen mit der Führungsfläche 25 des Aufweitdorns 21 ständig in Kontakt und bilden gemeinsam eine Nockenführung für die Aufweitung des Honwerkzeugs 1, nämlich für das Verschwenken der Segmente 5 in radialer Richtung nach außen. Ein vorgespannter, umschlingender Zugfederstrang 30 ist in entsprechenden Ausnehmungen 31 des am Umfang des Tragkörpers 2 sowie an den äußeren Schmalseiten der Segmente 5 angeordnet und dient zur Rückführung der Segmente 5 in die in Figur 1 und 4 dargestellte Ruhelage.

Eine Rückstellfeder 33, die sich mit einem Ende an einem Absatz 32 der Bohrung 23 in dem Verbindungsschaft 3 und mit dem anderen Ende an einer mit einer Schraube 35 an dem Schaft 22 befestigten Scheibe 34 abstützt, dient zur Rückstellung des Aufweitdorns 21 in die Ruhelage.

Die in Figur 6 dargestellte Vertikal-Honmaschine ist für eine Benutzung des vorbeschriebenen Honwerkzeugs 1 zur Herstellung insbesondere konischer Bohrungen ausgerüstet worden.

Der übliche Aufbau dieser Vertikal-Honmaschine umfaßt ein nicht sichtbares und mit einem Gehäuse 36 verkleidetes Fundament, auf dem ein Ständer 37 mit einer Brücke 38 am oberen Ende ruht. Zwischen der Brücke 38 und dem Fundament erstreckt sich in vertikaler Lage eine Führungssäule 39, an der ein Hubschlitten 40 mit einer Honspindel 41 und einer daran befestigten Antriebsstange 42 vertikal in Richtung der durch einen Doppelpfeil kenntlich gemachten Z-Achse verfahrbar ist. Unterhalb der Antriebsstange 42 befindet sich eine Spannvorrichtung 43 mit Spannzylindern 45 zur Aufnahme von Werkstücken 44. An einem schwenkbaren Arm 47 befindet sich eine Steuerung 46 mit einem Bildschirm (Commander), mit der alle Maschinenfunktionen veranlaßt werden. Die Drehbewegung der Antriebsstange 42 ist durch einen entsprechenden Doppelpfeil kenntlich gemacht, der eine C-Achse veranschaulichen soll.

Zur Benutzung und Anwendung einer bevorzugten Ausführungsform des erfindungsgemäßen Honwerkzeugs und zur Durchführung des erfindungsgemäßen Verfahrens sind die Honspindel 41 sowie die Antriebsstange 42 der Honmaschine als Hohlwellen ausgeführt, durch die sich eine Schübstange 48 erstreckt, die in die Bohrung 23 des Verbindungsschaftes 3 zum Antrieb bzw. zur Verschiebung des Aufweitdorns 21 greift. (vgl. auch Fig. 8).

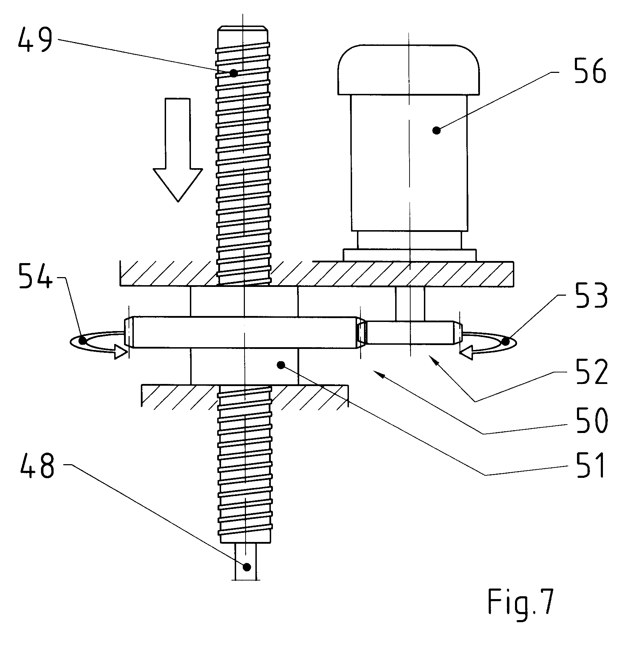

Das obere Ende der Schubstange 48 ist, wie Figur 7 zeigt, als Gewindespindel 49 mit einer Kugelrollspindellagerung 50 auf dem Hübschlitten 40 angeordnet. Ein Motor 56 bildet den Drehantrieb für die Spindelmutter 51 über ein Untersetzungsgetriebe 52, dessen Drehrichtungen mit Pfeilen 53, 54 veranschaulicht sind.

Diese Antriebseinrichtung mit der Kugelrollspindellagerung 50 bildet einen äußerst präzisen und schnellen Antrieb für die axiale Verstellung der Schübstange 48 für eine entsprechend genaue und schnelle Aufweitung des Honwerkzeugs 1.

Figur 6 zeigt die vorgenannte Antriebseinrichtung der Honmaschine mit dem Honwerkzeug 1 in einer Position oberhalb eines Werkstücks 44 mit konischer Bohrung 55 in in der Spannvorrichtung 43 eingespannter Lage.

Zum Herstellen einer konischen Bohrung 55 in einem Werkstück 44, wie es Figur 6 veranschaulicht, wird das am unteren Ende der Antriebsstange 42 befestigte Honwerkzeug 1, das sich in der in Figur 1 und 4 dargestellten Ruhelage befindet, in die Öffnung des Werkstücks 44 durch entsprechendes Verfahren des Hubschlittens 40 gebracht, wo das bereits beschriebene Bearbeitungsverfahren zum Herstellen der konischen Bohrung 55 automatisch nach Programm abläuft.

Der Aufweitdorn 21 wird zur Erreichung der vorgegebenen Aufweitungsposition durch die Schubstange 48 entsprechend weit nach vorn verschoben, so daß über die jeweils aus der Rolle 27 und der Führungsfläche 25 bestehende Nockenführung jedes Segment 5 entsprechend weit um den Zapfen 13 radial nach außen verschwenkt wird, bis die Honflächen der drei Honelemente 17 mit der Bohrungswandung in Eingriff stehen und die vorgegebene Andruckkraft $F_N$ aufgebracht ist. Es versteht sich von selbst, daß dem Honwerkzeug 1 zu diesem Zeitpunkt bereits eine entsprechende Drehbewegung erteilt ist.

Beim Ausfahren insbesondere bei der nachfolgenden Honbearbeitung wird jedes Segment 5 beidseitig in der schlitzförmigen Ausnehmung 8 geführt und gestützt, wobei der am Ende jedes Honzyklus erfolgende Drehrichtungswechsel in Verbindung mit einem entsprechenden Richtungswechsel der Andrückkräfte zu beachten ist. Entsprechend wird jedes Honelement 17, das sich durch die schwenkbare Lagerung jeder Konusneigung anpassen kann, beidseitig in der entsprechenden Ausnehmung 7 geführt und gehalten, so daß die Schnittkräfte, die von den Honflächen der Honelemente 17 aus über die Honelemente 17 auf die Segmente 5 und von dort auf den Tragkörper 2 übertragen werden, spielfrei und vibrationsfrei sowie ohne Formänderung der kraftübertragenden Teile durch Biegung vom Tragkörper 2 aufgenommen werden.

Die Zeichnungen lassen in Verbindung mit der Beschreibung erkennen, daß mit dem Honwerkzeug 1 ein sehr weiter Durchmesserbereich ohne Werkzeugwechsel bearbeitet werden kann.

Zur Rückstellung der Segmente 5 wird zunächst die Schubstange 48 durch eine nicht dargestellte Rückholfeder zurückgestellt, wodurch gleichzeitig die Rückstellfeder 33 und der umschlingende Zugfederstrang 30 wirksam werden und den Aufweitdorn 21 und die drei Segmente 5 in die in Figur 1 und 4 dargestellte Ruhelage zurückstellen, wo sich die Segmente 5 einschließlich der Honelemente 17 innerhalb des Querschnittsprofils des Tragkörpers 2 befinden (vgl. Fig. 4).

Ein nicht dargestellter Wegaufnehmer, der zweckmäßig im Bereich der Schubstangenantriebseinrichtung oberhalb des Hubschlittens 40 der Honmaschine angeordnet ist, kontrolliert die Momentanposition der Schubstange 48 und damit der Aufweitung des Honwerkzeugs 1 genau für eine Kontrolle und Steuerung der Bearbeitung durch das Programm.

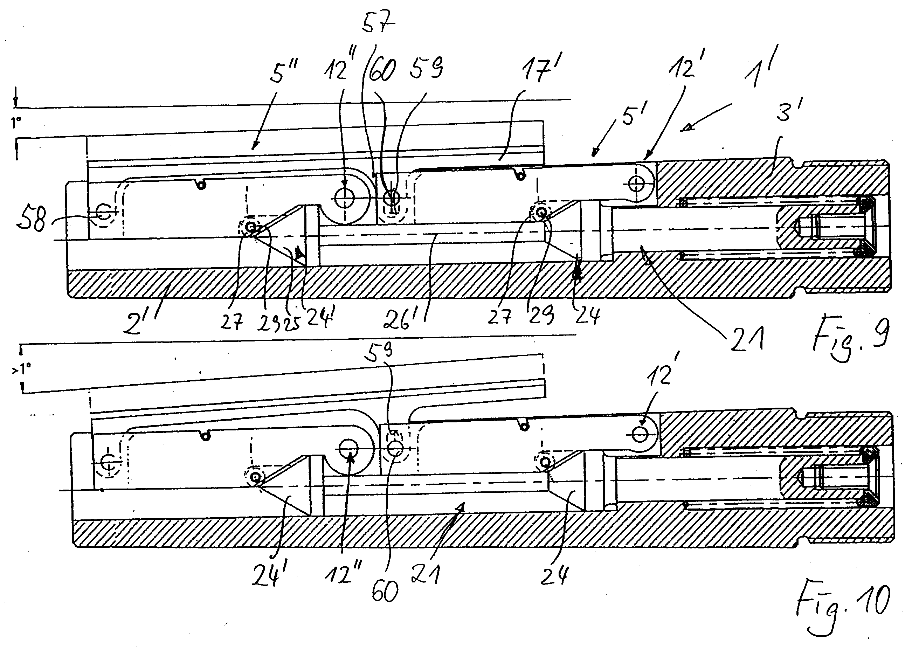

In einem in Fig. 9 und 10 dargestellten weiteren Ausführungsbeispiel sind zwei kranzförmige Segmentanordnungen ähnlicher Art wie bei dem vorhergehend beschriebenen Honwerkzeug 1 hintereinander an dem gleichen Tragkörper 2' angeordnet, und zwar vorzugsweise wieder drei an der Zahl. Diese Anordnung wird Tandem-Lösung genannt, weil jeweils zwei Segmente 5' und 5" in einer Reihe hintereinander angeordnet sind. Im Unterschied zu der vorhergehend beschriebenen Lösung ist das Honelement 17 (Honleiste) hier auf den beiden hintereinander liegenden Segmenten 5' und 5" drehbar bzw. gelenkig gelagert. Das vordere Ende des Honelements 17' ist mittels eines Zapfens 58 drehbar am vorderen Ende des vorderen Segments 5" drehbar gelagert, während eine im Abstand von dem hinteren Ende des Honelements 17' angeordnete Lagerstütze 57 ein Langloch 59 aufweist, in dem ein ein Drehlager bildender Zapfen 60 am vorderen Ende des zweiten Segments 5' angebracht ist.

**Patentansprüche**

1. Verfahren zum Herstellen (55) konischer Bohrungen an einem Werkstück (44) mittels eines Honwerkzeugs (1), das einen zentralen Tragkörper (2) aufweist und mit diesem an der Spindel einer Honmaschine angeordnet ist, mit der dem Honwerkzeug (1) eine Drehbewegung um die Spindelachse mit steuerbarer Drehzahl und eine intermittierende Translationswegung längs eines Hubweges in Richtung der Spindelachse erteilbar ist, und dessen am Umfang des zentralen Tragkörpers (2) bewegbar gelagerte und außen Honflächen tragenden Honelemente (17) für einen fortschreitenden Abtrag längs eines radialen Weges in Richtung einer Aufweitungsachse verstellbar sind, dadurch **gekennzeichnet**, daß die Honflächen im wesentlichen auf Wendelbahnen, die der vorgegebenen Konusneigung (Winkel β) entsprechen und - bezogen auf die gleichen Momentanquerschnitte - mit zunehmendem Abtrag entsprechend zunehmende Wendelradien aufweisen, bis zum Erreichen einer Wendelbahn geführt werden, die auf der Mantelfläche des vorgegebenen Konusprofils verläuft, und daß die mittlere Schnittgeschwindigkeit $v_{cm}$ durch eine rechnergestützte Steuerung der Hubgeschwindigkeit $v_p$, der Aufweitgeschwindigkeit $v_n$ in radialer Richtung und der Umfangsgeschwindigkeit $v_r$ längs der Wendelbahnen geregelt und - mit Ausnahme der Beschleunigungsphase jeweils am Bahnanfang und der Verzögerungsphase jeweils am Bahnende - längs jedes Hubweges unabhängig von der Position der zu honenden Fläche des Werkstücks (44) auf einem im wesentlichen konstanten Wert gehalten wird.

2. Verfahren nach Anspruch 1, dadurch **gekennzeichnet**, daß eine geeignete konstante Hubgeschwindiget $v_p$ vorgegeben und ein im wesentlichen in Abhängigkeit von dem Schneidstoff der Honflächen und von dem Werkstoff des Werkstücks gewählter mittlerer Wert der Schnittgeschwindigkeit $v_{cm}$ nach der Formel

$$v_{cm} = \sqrt{v_l^2 + v_r^2}$$

durch entsprechende Regelung der Umfangsgeschwindigkeit $v_r$ und der Konusgeschwindigkeit $v_l$, für die

$$v_r = \frac{D_{cm} \times \pi \times n}{1000}$$

und

$$v_l = \sqrt{v_p^2 + v_n^2}$$

gilt,
im wesentlichen konstant gehalten wird.

3. Verfahren nach Anspruch 1 oder 2, dadurch **gekennzeichnet**, daß jeweils ein geeigneter Wert für die Hubgeschwindigkeit $v_p$ und für die Aufweitgeschwindigkeit $v_n$ vorgegeben und konstant gehalten wird, während die Umfangsgeschwindigkeit $v_r$ kontinuierlich derart geregelt wird, daß der vorgegebene Wert der mittleren Schnittgeschwindigkeit $v_{cm}$ im wesentlichen konstant gehalten wird.

4. Verfahren nach einem oder mehreren der Ansprüche 1 - 3, dadurch **gekennzeichnet**, daß die Umfangsgeschwindigkeit $v_r$ bei im wesentlichen konstant gehaltene mittlerer Schnittgeschwindigkeit $v_{cm}$ derart unter Berücksichtigung der ebenfalls im wesentlichen auf einem konstanten Wert gehaltenen Hubgeschwindigkeit $v_p$ geregelt wird, daß ein Wert für den Kreuzungswinkel der Wendelbahnen in der Größenordnung von 50 bis 90° erreicht wird.

5. Honwerkzeug zur Durchführung eines Verfahrens zum Herstellen konischer Bohrungen (55) an einem Werkstück (44) mittels eines Honwerkzeugs (1), das einen zentralen Tragkörper (2) aufweist und mit diesem an der Spindel einer Honmaschne angeordnet ist, mit der dem Honwerkzeug (1) eine Drehbewegung um die Spindelachse mit steuerbarer Drehzahl und eine intermittierende Translationsbewegung längs eines Hubweges in Richtung der Spindelachse erteilbar ist, und dessen am Umfang des zentralen Tragkörpers (2) bewegbar gelagerte und außen Honflächen tragenden Honelemente (17) für einen fortschreitenden Abtrag längs eines radialen Weges in Richtung einer Aufweitungsachse verstellbar sind, **dadurch gekennzeichnet**, daß an dem Tragkörper (2) in symmetrischer Verteilung Segmente (5) in Radialebenen schwenkbar gelagert sind, die radial nach außen weisende, drehbar gelagerte Honelemente (17) tragen und deren Schwenkbewegung mittels einer Aufweitvorrichtung, insbesondere während des Arbeitshubes des Honwerkzeugs (1), steuerbar ist, und daß die mittlere Schnittgeschwindigkeit $v_{cm}$ durch eine rechnergestützte Steuerung der Hubgeschwindigkeit $v_p$, der Aufweitgeschwindigkeit $V_n$ in radialer Richtung und der Umfangsgeschwindigkeit $v_r$ längs der Wendelbahnen geregelt und - mit Ausnahme der Beschleunigungsphase jeweils am Bahnanfang und der Verzögerungsphase jeweils am Bahnende - längs jedes Hubweges unabhängig von der Position der zu honenden Fläche des Werkstücks (44) auf einem im wesentlichen konstanten Wert gehalten wird.

6. Honwerkzeug nach Anspruch 5, dadurch **gekennzeichnet**, daß die Aufweitvorrichtung mechanisch als im Tragkörper (2) verschiebbarer Aufweitdorn (21) mit einem Nockengetriebe (25, 27) oder einem Kurbelgetriebe od. dgl. zum Ausschwenken der Segmente (5) ausgebildet ist.

7. Honwerkzeug nach Anspruch 5 oder 6, dadurch **gekennzeichnet**, daß das Nockengetriebe (25, 27) aus segmentseitigen Rollen (27) und dornseitigen Führungsflächen (25) oder umgekehrt aus dornseitigen Rollen und segmentseitigen Führungsflächen besteht.

8. Honwerkzeug nach einem oder mehreren der Ansprüche 5 - 7, dadurch **gekennzeichnet**, daß jedes Segment (5) eine langgestreckte Form aufweist und mit einem Ende (11) drehbar an dem Tragkörper (2) gelagert ist und daß sich der Kontaktbereich der Aufweitvorrichtung (Aufweitdorn 21) näher an dem drehbar gelagerten Ende (11) als an dem anderen Ende (14) des Segments (5) befindet.

9. Honwerkzeug nach einem oder mehreren der Ansprüche 5 - 8, dadurch **gekennzeichnet**, daß sich das Honelement (17) im Bereich des anderen von dem Drehlager (12) des Segmentes (5) entfernten Ende (14) des Segments (5) befindet.

10. Honwerkzeug nach einem oder mehreren der Ansprüche 5 - 9, dadurch **gekennzeichnet**, daß das andere Ende (14) des Segments (5) entweder frei ist oder durch eine entsprechende gelenkige Verbindung mit dem Tragkörper (2) geführt ist.

11. Honwerkzeug nach einem oder mehreren der Ansprüche 5 - 10, dadurch **gekennzeichnet**, daß die Segmente (5) in radialen Aufnahmeschlitzen (7) des Tragkörpers (2) drehbar gelagert sind, die vorzugsweise Führungsschlitze für eine beidseitige Abstützung bzw. Führung der Segmente (5) bilden.

12. Honwerkzeug nach einem oder mehreren der Ansprüche 5 - 11, dadurch **gekennzeichnet**, daß der Aufweitdorn (21) in einer zentralen axialen Bohrung (9) des Tragkörpers (2) axial verschiebbar gelagert ist und eine im Querschnitt gewölbte, am Umfang des Aufweitdorns (21) ringsum verlaufende Führungsfläche (25) aufweist, die mit entsprechenden Rollen (27) an der Innenseite jedes Segments (5) in Eingriff steht und die das Verschwenken der Segmente (5) bewirkt, wenn der Aufweitdorn (21) mittels einer Schubstange (48) axial nach vorn bewegt wird, die mit einem Stellgetriebe bzw. einer Schubantriebseinrichtung zu verbinden ist.

13. Honwerkzeug nach einem oder mehreren der Ansprüche 5 - 12, dadurch **gekennzeichnet**, daß die Segmente (5) in der Ruhelage an bzw. in dem Tragkörper (2) anliegen, und zwar vorzugsweise bündig in den Aufnahmeschlitzen (7), die die Segmente (5) als Führungsschlitze beidseitig abstützen.

14. Honwerkzeug nach Anspruch 13, dadurch **gekennzeichnet**, daß die Segmente (5) in der Ruhelage im Tragkörper (2) an einem zentralen Anschlagzapfen (26) anliegen, der als Fortsatz des Aufweitdorns (21) ausgebildet ist.

15. Honwerkzeug nach einem oder mehreren der Ansprüche 5 - 14, dadurch **gekennzeichnet**, daß zur Rückholung der Segmente (5) eine Ringfeder (30) in entsprechenden Ausnehmungen (31) an der Außenseite des Tragkörpers (2) sowie jedes Segmentes (5) eingelegt ist.

16. Honwerkzeug nach einem oder mehreren der Ansprüche 5 - 15, dadurch **gekennzeichnet**, daß zur Rückführung des Aufweitdorns (21) in die Ruhelage eine Rückstellfeder (33) zwischen einem Absatz (32) in einer rückseitigen Bohrung (23) des Tragkörpers (2) und einem Ansatz des Aufweitdorns (21) eingesetzt ist, wobei der Absatz durch eine Scheibe (34) am inneren Ende des Aufweitdorns (21) gebildet sein kann.

17. Honwerkzeug nach einem oder mehreren der Ansprüche 5 - 16, dadurch **gekennzeichnet,** daß jedes Honelement (17) schwenkbar an dem betreffenden Segment (5) gelagert und vorzugsweise als Honleiste ausgebildet ist.

18. Honwerkzeug nach Anspruch 17, dadurch **gekennzeichnet**, daß das Schwenklager der Honleiste bzw. des Honelements (17) an einer von dem Drehlager (12) bzw. der Anlenkstelle des einen Endes (11) des Segmentes (5) am Tragkörper (2) abgewandten Stelle, vorzugsweise am freien Ende (14) des Segmentes (5), angeordnet ist.

19. Honwerkzeug nach Anspruch 17 oder 18, dadurch **gekennzeichnet**, daß jedes Segment (5) aus zwei fest miteinander verbundenen Segmentplatten (6) besteht, zwischen denen ein mit einem Honstein (20) od. dgl. besetzter Steg (19) des Honelementes (17) mittels eines Zapfens (18) schwenkbar gehalten und geführt ist.

20. Honwerkzeug nach einem oder mehreren der Ansprüche 17 - 19, dadurch **gekennzeichnet**, daß das Schwenklager des Honelementes (18) mittig an diesem angeordnet ist.

21. Honwerkzeug nach einem oder mehreren der Ansprüche 5 - 20, dadurch **gekennzeichnet**, daß drei oder mehr Segmente (5), vorzugsweise in ungrader Zahl, symmetrisch verteilt an dem Tragkörper (2) angeordnet sind.

## Claims

1. Method for making (55) conical bores on a workpiece (44) by means of a honing tool (1), which has a central support body (2) and is arranged therewith on the spindle of a honing machine, with which to the honing tool (1) is imparted a rotary movement about the spindle axis with a controllable speed and an intermittent translatory motion along a stroke in the direction of the spindle axis and whose honing element (17) movably mounted on the circumference of the central support body (2) and carrying externally honing faces are adjustable for a progressive abrasion along a radial path in the direction of an expansion axis, characterized in that the honing faces are substantially guided on helical paths, which correspond to the preset conical inclination (angle $\beta$) and, based on the same instantaneous cross-sections, with increasing abrasion have correspondingly increasing helical radii, until a helical path is reached, which runs on the circumferential surface of the preset conical profile, and that the average cutting speed $v_{cm}$ is regulated by a computer-aided control of the stroke speed $v_p$, the expansion speed $v_n$ in the radial direction and the circumferential speed $v_r$ along the helical paths and, with the exception of the acceleration phase at the start of the path and the deceleration phase at the end of the path, is kept at a substantially constant value along each stroke, independently of the position of the surface of the workpiece (44) to be honed.

2. Method according to claim 1, characterized in that a suitable constant stroke speed $v_p$ is preset and a mean value of the cutting speed $v_{cm}$ according to the formula

$$v_{cm} = \sqrt{v_l^2 - v_r^2}$$

substantially chosen as a function of the cutting material of the honing faces and the material of the workpiece is kept substantially constant by correspondingly regulating the circumferential speed $v_r$ and the cone speed $v_l$, for which apply

$$v_r = \frac{D_{cm} \times \pi \times n}{1000}$$

and

$$v_l = \sqrt{v_p^2 + v_n^2}$$

3. Method according to claim 1 or 2, characterized in that in each case a suitable value is preset for the stroke speed $v_p$ and for the expansion speed $v_n$ and kept constant, whilst the circumferential speed $v_r$ is continuously regulated in such a way that the preset value of the mean cutting speed $v_{cm}$ is kept substantially constant.

4. Method according to one or more of the claims 1 to 3, characterized in that the circumferential speed $v_r$, whilst keeping substantially constant the mean cutting speed $v_{cm}$, is so regulated taking account of the stroke speed $v_p$, also kept at a substantially constant value, that a value of approximately 50 to 90° is obtained for the crossing angle of the helical paths.

5. Honing tool for performing a method for making conical bores (55) on a workpiece (44) by means of a honing tool (1), which has a central body (2) and is arranged therewith on the spindle of a honing machine, with which to the honing tool (1) is imparted a rotary movement about the spindle axis with controllable speed and an intermittent translatory movement along a stroke in the direction of the spindle axis, and whose honing elements (17) movably mounted on the circumference of the central support body (2) and externally carrying honing faces are adjustable in the direction of an expansion axis for a progressive abrasion along a radial path, characterized in that on the support body (2) in symmetrical distribution are pivotably mounted segments (5) in radial planes, which carry radially outwardly directed, rotatably mounted honing elements (17) and whose pivoting movement is controllable by means of an expanding device, particularly during the working stroke of the honing tool (1), and that the mean cutting speed $v_{cm}$ is regulated by a computer-aided control of the stroke speed $v_p$, the expansion speed $v_n$ in the radial direction and the circumferential speed $v_r$ along helical paths and, with the exception of the acceleration phase at the start of the path and the deceleration phase at the end of the path, is kept at a substantially constant value along each stroke independently of the position of the surface of the workpiece (44) to be honed.

6. Honing tool according to claim 5, characterized in that the expanding device is mechanically constructed as an expanding mandrel (21), displaceable in the support body (2), with a cam mechanism (25, 27) or a crank mechanism or the like for pivoting out the segments (5).

7. Honing tool according to claim 5 or 6, characterized in that the cam mechanism (25, 27) comprises segment-side rolls (27) and mandrel-side guide faces (25) or conversely mandrel-side rolls and segment-side guide faces.

8. Honing tool according to one or more of the claims 5 to 7, characterized in that each segment (5) has an elongated shape and one end (11) thereof is rotatably mounted on the support body (2) and that the contact area of the expanding device (expanding mandrel 21) is closer to the rotatably mounted end (11) than to the other end (14) of the segment (5).

9. Honing tool according to one or more of the claims 5 to 8, characterized in that the honing element (17) is located in the vicinity of the other end (14) of the segment (5) remote from the pivot bearing (12) of said segment (5).

10. Honing tool according to one or more of the claims 5 to 9, characterized in that the other end (14) of the segment (5) is either free or is guided by a corresponding articulated connection with the support body (2).

11. Honing tool according to one or more of the claims 5 to 10, characterized in that the segments (5) are rotatably mounted in radial holding slots (7) of the support body (2) and which preferably form guide slots for a bilateral supporting or guiding of the segments (5).

12. Honing tool according to one or more of the claims 5 to 11, characterized in that the expanding mandrel (21) is axially displaceably mounted in a central, axial bore (9) of the support body (2) and has a cross-sectionally domed guide surface (25) passing completely round the circumference of the expanding mandrel (21) and engaging with corresponding rolls (27) on the inside of each segment (5) and bringing about the pivoting of the segments (5), if the expanding mandrel (21) is moved axially forwards by means of a connecting rod (48), which is to be connected to a control gear or a thrust drive means.

13. Honing tool according to one or more of the claims 5 to 12, characterized in that, in the inoperative position, the segments (5) engage on or in the support body (2) and preferably flush in the holding slot (7), which bilaterally support the segments (5) as guide slots.

**14.** Honing tool according to claim 13, characterized in that, in the inoperative position, the segments (5) in the support body (2) engage on a central stop stud (26), which is constructed as an extension of the expanding mandrel (21).

**15.** Honing tool according to one or more of the claims 5 to 14, characterized in that for the return of the segments (5), an annular spring (30) is inserted in corresponding recesses (31) on the outside of the support body (2) and each segment (5).

**16.** Honing tool according to one or more of the claims 5 to 15, characterized in that for returning the expanding mandrel (21) to the inoperative position, a restoring spring (33) is inserted between a step (32) in a rear bore (23) of the support body (2) and a step of the expanding mandrel (21), it being possible to form the step by a disk (34) on the inner end of the expanding mandrel (21).

**17.** Honing tool according to one or more of the claims 5 to 16, characterized in that each honing element (17) is pivotably mounted on the particular segment (5) and is preferably constructed as a honing ledge.

**18.** Honing tool according to claim 17, characterized in that the swivel bearing of the honing ledge or honing element (17) is located at a point remote from the pivot bearing (12) or the articulation point of one end (11) of the segment (5) on the support body (2), preferably on the free end (14) of the segment (5).

**19.** Honing tool according to claim 17 or 18, characterized in that each segment (5) comprises two firmly interconnected segment plates (6), between which is pivotably held and guided by means of a stud (18) a web (19) of the honing element (17) carrying a honing stone (20) or the like.

**20.** Honing tool according to one or more of the claims 17 to 19, characterized in that the swivel bearing of the honing element (18) is centrally positioned thereon.

**21.** Honing tool according to one or more of the claims 5 to 20, characterized in that there are three or more segments (5), preferably an uneven number thereof, distributed symmetrically on the support body (2).

**Revendications**

**1.** Procédé pour fabriquer (55) des forures coniques sur une pièce à usiner (44) au moyen d'un outil à pierrer (1) qui présente un corps porteur central (2) et qui est placé avec celui-ci sur la broche d'une machine à pierrer avec laquelle il peut être inculqué à l'outil à pierrer un mouvement de rotation autour de l'axe de la broche avec un nombre de tours que l'on peut commander et un mouvement de translation intermittent le long d'un parcours de levage en direction de l'axe de la broche et dont les éléments de pierrage (17) positionnés mobiles sur la périphérie du corps porteur central (2) et portant à l'extérieur des surfaces de pierrage peuvent être réglés pour une abrasion progressive le long d'une trajectoire radiale en direction d'un axe d'élargissement, caractérisé en ce que les faces de pierrage sont guidées substantiellement sur des trajectoires hélicoïdales, qui correspondent à l'inclinaison prédéfinie du cône (angle $\beta$) et qui présentent - par rapport aux mêmes sections momentanées - avec l'abrasion croissante des rayons hélicoïdaux croissants correspondants jusqu'à atteindre une trajectoire hélicoïdale qui passe sur la surface de l'enveloppe du profil conique prédéfini, et que la vitesse moyenne de coupe $v_{cm}$ est réglée par une commande assistée par ordinateur de la vitesse de levée $v_p$, de la vitesse d'élargissement $v_n$ dans le sens radial et de la vitesse circonférentielle $v_r$ le long des trajectoires hélicoïdales et - à l'exception de la phase d'accélération respectivement au début de la trajectoire et de la phase de ralentissement respectivement à la fin de la trajectoire - est maintenue à une valeur substantiellement constante le long de chaque course de levage indépendamment de la position de la surface devant être pierrée de la pièce à usiner (44).

**2.** Procédé selon la revendication 1, caractérisé en ce qu'une vitesse de levage constante appropriée $v_p$ est prédéfinie et une valeur moyenne de la vitesse de coupe $v_{cm}$, sélectionnée substantiellement en fonction de la matière de coupe des surfaces de pierrage et du matériau de la pièce à usiner selon la formule

$$v_{cm} = \sqrt{v_1{}^2 + v_r{}^2}$$

est maintenue substantiellement constante par le réglage correspondant de la vitesse circonférentielle $v_r$ et de la vitesse du cône $v_l$ pour laquelle

$$vr = \frac{D_{cm} \times p \times n}{1000}$$

et

$$v_1 = \sqrt{v_p{}^2 + v_n{}^2}$$

sont valables.

3. Procédé selon la revendication 1 ou 2, caractérisé en ce que respectivement une valeur appropriée est prédéfinie pour la vitesse de levage $v_p$ et pour la vitesse d'élargissement $v_n$ et est maintenue constante, tandis que la vitesse circonférentielle $v_r$ est réglée en continu de telle manière que la valeur prédéfinie de la vitesse moyenne de coupe $v_{cm}$ est maintenue substantiellement constante.

4. Procédé selon l'une ou plusieurs des revendications 1 à 3, caractérisé en ce que la vitesse circonférentielle $v_r$ est réglée, pour une vitesse de coupe $v_{cm}$ moyenne maintenue substantiellement constante, en tenant compte de la vitesse de levée $v_p$ également maintenue substantiellement à une valeur constante, de manière à obtenir une valeur pour l'angle de coupe des trajectoires hélicoïdales de l'ordre de grandeur de 50 à 90°.

5. Outil à pierrer pour réaliser un procédé pour fabriquer (55) des forures coniques sur une pièce à usiner (44) au moyen d'un outil à pierrer (1) qui présente un corps porteur central (2) et qui est placé avec celui-ci sur la broche d'une machine à pierrer avec laquelle il peut être inculqué à l'outil à pierrer un mouvement de rotation autour de l'axe de la broche avec un nombre de tours que l'on peut commander et un mouvement de translation intermittent le long d'un parcours de levage en direction de l'axe de la broche et dont les éléments de pierrage (17) positionnés mobiles sur la périphérie du corps porteur central (2) et portant à l'extérieur des surfaces de pierrage peuvent être réglés pour une abrasion progressive le long d'une trajectoire radiale en direction d'un axe d'élargissement, caractérisé en ce que des segments (5) sont positionnés pivotants dans des plans radiaux sur le corps porteur (2) en répartition symétrique, segments qui portent des éléments de pierrage (17) orientés radialement vers l'extérieur, positionnés rotatifs, et dont le mouvement de pivotement peut être commandé au moyen d'un dispositif d'élargissement, en particulier pendant la course de travail de l'outil de pierrage (1), et que la vitesse moyenne de coupe $v_{cm}$ est réglée par une commande assistée par ordinateur de la vitesse de levée $v_p$, de la vitesse d'élargissement $v_n$ dans le sens radial et de la vitesse circonférentielle $v_r$ le long des trajectoires hélicoïdales et - a l'exception de la phase d'accélération respectivement au début de la trajectoire et de la phase de ralentissement respectivement à la fin de la trajectoire - est maintenue à une valeur substantiellement constante le long de chaque course de levage indépendamment de la position de la surface devant être pierrée de la pièce à usiner (44).

6. Outil à pierrer selon la revendication 5, caractérisé en ce que le dispositif d'élargissement est configuré mécaniquement comme un mandrin d'élargissement (21) coulissant dans le corps porteur (2) avec un engrenage à cames (25, 27) ou un biellage ou équivalent pour faire pivoter les segments (5).

7. Outil à pierrer selon la revendication 5 ou 6, caractérisé en ce que l'engrenage à cames (25, 27) est constitué par des rouleaux côté segment (27) et des surfaces de guidage côté mandrin (25) ou vice versa par des rouleaux côté mandrin et des surfaces de guidage côté segment.

8. Outil à pierrer selon l'une ou plusieurs des revendications 5 à 7, caractérisé en ce que chaque segment (5) présente une forme allongée et est positionné rotatif sur le corps porteur (2) avec une extrémité (11) et que la zone de contact du dispositif d'élargissement (mandrin d'élargissement 21) se trouve plus près de l'extrémité positionnée rotative (11) que de l'autre extrémité (14) du segment (5).

9. Outil à pierrer selon l'une ou plusieurs des revendications 5 à 8, caractérisé en ce que l'élément de pierrage (17) se trouve dans la zone de l'autre extrémité (14) du segment (5) éloignée du coussinet de rotation (12) du segment (5).

10. Outil à pierrer selon l'une ou plusieurs des revendications 5 à 9, caractérisé en ce que l'autre extrémité (14) du segment (5) est soit libre, soit guidée par une jonction articulée correspondante avec le corps porteur (2).

11. Outil à pierrer selon l'une ou plusieurs des revendications 5 à 10, caractérisé en ce que les segments (5) sont positionnés rotatifs dans des fentes de logement radiales (7) du corps porteur (2) qui forment de préférence des fentes de guidage pour un appui ou un guidage des deux côtés des segments (5).

12. Outil à pierrer selon l'une ou plusieurs des revendications 5 à 11, caractérisé en ce que le mandrin d'élargissement (21) est positionné coulissant axialement dans une forure axiale centrale (9) du corps porteur (2) et présente une surface de guidage (25) de section voûtée, courant tout autour sur la périphérie du mandrin d'élargissement (21), surface de guidage qui est en prise avec des rouleaux correspondants (27) sur le côté intérieur de chaque segment (5) et qui provoque le pivotement des segments (5), lorsque le mandrin d'élargissement (21) est déplacé axialement vers l'avant au moyen d'une bielle (48) qui doit être reliée à un engrenage de réglage ou à un dispositif d'entraînement de la poussée.

**13.** Outil à pierrer selon l'une ou plusieurs des revendications 5 à 12, caractérisé en ce que les segments (5) ont appui, en position de repos, sur ou dans le corps porteur (2), et ce de préférence en étant à fleur dans les fentes de logement (7) qui supportent les segments (5) des deux côtés comme fentes de guidage.

**14.** Outil à pierrer selon la revendication 13, caractérisé en ce que les segments (5) ont appui, en position de repos, dans le corps porteur (2) sur un tourillon de butée central (26) qui est configuré comme prolongement du mandrin d'élargissement (21).

**15.** Outil à pierrer selon l'une ou plusieurs des revendications 5 à 14, caractérisé en ce que, pour le rappel des segments (5), un ressort-bague (30) est mis en place dans des évidements correspondants (31) sur le côté extérieur du corps porteur (2) ainsi que de chaque segment (5).

**16.** Outil à pierrer selon l'une ou plusieurs des revendications 5 à 15, caractérisé en ce que, pour ramener le mandrin d'élargissement (21) en position de repos, un ressort de rappel (33) est mis en place entre un gradin (32) dans une forure arrière (23) du corps porteur (2) et un gradin du mandrin d'élargissement (21), le gradin pouvant être formé par un disque (34) à l'extrémité intérieure du mandrin d'élargissement (21).

**17.** Outil à pierrer selon l'une ou plusieurs des revendications 5 à 16, caractérisé en ce que chaque élément de pierrage (17) est positionné pivotant sur le segment concerné (5) et est configuré de préférence comme baguette de pierrage.

**18.** Outil à pierrer selon la revendication 17, caractérisé en ce que le coussinet pivotant de la baguette de pierrage ou de l'élément de pierrage (17) est placé à un endroit détourné du coussinet de rotation (12) ou du point d'appui de l'une des extrémités (11) du segment (5) sur le corps porteur (2), de préférence à l'extrémité libre (14) du segment (5).

**19.** Outil à pierrer selon la revendication 17 ou 18, caractérisé en ce que chaque segment (5) est constitué par deux plaques de segment (6) reliées de manière fixe l'une à l'autre entre lesquelles une entretoise (19) de l'élément de pierrage (17), qui est équipée d'une pierre abrasive à pierrer (20) ou équivalent, est maintenue pivotante et guidée au moyen d'un tourillon (18).

**20.** Outil à pierrer selon l'une ou plusieurs des revendications 17 à 19, caractérisé en ce que le coussinet de pivotement de l'élément de pierrage (18) est placé sur celui-ci en son milieu.

**21.** Outil à pierrer selon l'une ou plusieurs des revendications 5 à 20, caractérisé en ce que trois segments ou davantage (5), de préférence en nombre impair, sont placés en étant symétriquement répartis sur le corps porteur (2).

Fig.4

Fig.1

4
23
32
28
29
27
30
31
17
18
20
19

35
34
33
22
24
25
21
26

Fig.2

4

4

Fig.5

6

6

31

30

7

Fig.3

Fig.6

49

56

54

53

52

50

51

48

Fig.7

$V_r$    C-Achse

$V_{n'}$   $\mu'$-Achse

$\beta$

$V_n$   U-Achse

$V_l$    $V_p$

$V_p$   Z-Achse

$l_s/2$

$l_s$    $V_B$

$l_s/2$

$F_N$

$D_{cm}$

Fig. 8

Fig. 9

Fig. 10

EP 0 569 926 B1